# EUROPEAN PATENT APPLICATION

(11) **EP 2 530 338 A1**
(43) Date of publication of application: **05.12.2012**
(21) Application number: 10844587.5
(22) Date of filing: 28.01.2010
(51) Int. Cl.: F16B 19/00

(54) **CLIP**

(71) Applicant: Nifco Inc., Kanagawa 244-8522 (JP)
(72) Inventor: SEINO, Yoshimitsu, Yokohama-shi Kanagawa 244-8522 (JP)
(74) Representative: Gassner, Wolfgang
(86) International application number: PCT/JP2010/051163
(87) International publication number: WO 2011/092825

(57) **Abstract**

A claw of a clip includes a slit, an elastic piece, a hinge and a protrusion. The slit includes a pair of opposed vertical grooves parallel to an inserting direction of a leg, a horizontal groove communicating rear ends of both the vertical grooves in the inserting direction of the leg with each other, and a pair of bent grooves line-symmetrically bent closer to each other from front ends of both the vertical grooves in the inserting direction of the leg.

## Description

### Technical Field

The present invention relates to a clip for fixing a part to an attachment hole of a base, the clip being capable of reducing its inserting force by bending ends of a slit surrounding a claw closer to each other.

### Background Art

A clip having linear ends of a U-shaped slit surrounding a claw has been conventionally known (refer to, for example, paragraph "0032", and Figs. 3 and 4 in Patent literature 1).

### Citation List

### Patent Literature

Patent literature 1: Japanese Unexamined Patent Publication No. 2006-161890 (paragraph "0032", and Figs. 3 and 4)

### Summary of the Invention

### Technical Problem

However, in the above-mentioned conventional clip, since the ends of the slit are linearly formed, it is disadvantageously difficult to reduce only the inserting force without substantially lowering a pulling force.
Thus, the present invention is made in consideration of the above-mentioned problem of the conventional art, and its object is to reduce the inserting force of the clip while substantially keeping the pulling force.

### Solution to Solve the Problem

To attain the object, the present invention provides a clip for attaching a part to an attachment hole of a base, the clip comprising:
a leg that can be inserted into the attachment hole;
a base portion greatly overhanging from a rear end of the leg in an inserting direction further than an inner shape of the attachment hole; and
a claw that is away from and opposed to the base portion and elastically protrudes from an outer side surface of the leg, wherein when the leg is inserted into the attachment hole, the claw is pressed by an inner edge of the attachment hole and bens into a hollow portion of the leg, and after passing through the attachment hole, the claw is restored to an original state by an elastic force and holds the base between the claw and the base portion from front and back surfaces of the base,
wherein the claw includes
a U-shaped slit passing through front and back surfaces of at least one side wall of the leg,
an elastic piece surrounded with the slit,
a hinge that has no slit, communicates with the elastic piece and the side wall with each other, and is located on a front end side in the inserting direction of the leg, and
a protrusion that protrudes from an outer side surface of the elastic piece, and is away from and opposed to the base portion, and
the slit includes
an opposed pair of vertical grooves parallel to the inserting direction of the leg,
a horizontal groove communicating rear ends of both the vertical grooves in the inserting direction of the leg with each other, and
a pair of bent grooves line-symmetrically bent close to each other from front ends of both the vertical grooves in the inserting direction of the leg.
It is preferred that the pair of bent grooves is circularly bent. This can mitigate concentration of a stress on the slit.
It is preferred that a width of the hinge in a direction orthogonal to the inserting direction of the leg is smaller than a horizontal width of the elastic piece on its free end side. This can further reduce the inserting force of the clip.
It is preferred that an inner side surface of the leg has at least a pair of ridges protruding into the hollow portion up to positions facing the vertical grooves. This can ensure the thickness of a wall of the leg, thereby ensuring resistance to shearing force applied to the clip (leg). The ridges also act to prevent unsteadiness of the inserted stopper.

### Advantageous Effects of Invention

Since the present invention is configured as described above, by bending the ends of the slit surrounding the claw so as to get closer to each other, it is possible to substantially keep the pulling force and reduce the inserting force of the clip.

### Brief Description of Drawings

Fig. 1 is a front view showing an example of a first embodiment of the present invention, which shows a fixing tool in an exploded state.
Fig. 2 is a perspective view showing the fixing tool in the exploded state.
Fig. 3 is a side view showing the fixing tool in the exploded state.
Fig. 4 is a plan view showing the fixing tool in the exploded state.
Fig. 5 is a bottom view showing the fixing tool in the exploded state.
Fig. 6 is a sectional view taken along line VI-VI in Fig. 1.
Fig. 7 is a front view showing a state where a stopper is tentatively fastened to the clip.
Fig. 8 is a side view showing the state where the stopper is tentatively fastened to the clip.
Fig. 9 is a sectional view taken along line IX-IX in Fig. 7.
Fig. 10 is a front view showing the fixing tool in an assembled state.
Fig. 11 is a side view showing the fixing tool in the assembled state.
Fig. 12 is a plan view showing the fixing tool in the assembled state.
Fig. 13 is a bottom view showing the fixing tool in the assembled state.
Fig. 14 is a sectional view taken along line XIV-XIV in Fig. 7.
Fig. 15 is a side view showing an example of a clip in accordance with a second embodiment of the present invention.
Fig. 16 is a side view showing an example of a clip in accordance with a third embodiment of the present invention.
Fig. 17 is a side view showing an example of a clip in accordance with a fourth embodiment of the present invention.
Fig. 18 is a side view showing a clip in a comparative example for the present invention.

### Description of the Embodiments

### Description of the Drawings

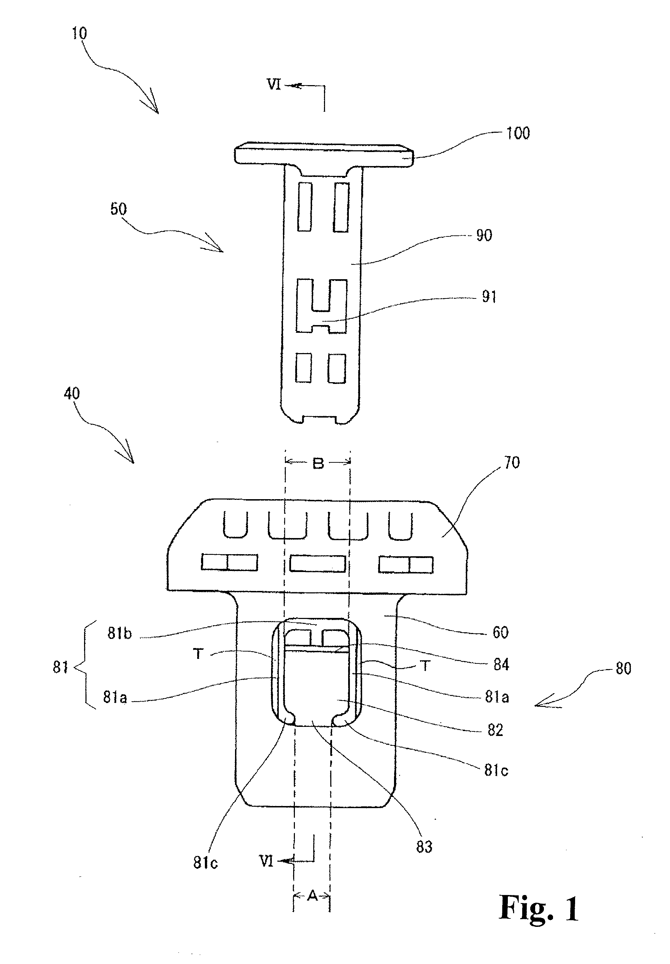

Figs. 1 to 14 each show an example of the first embodiment of the present invention.

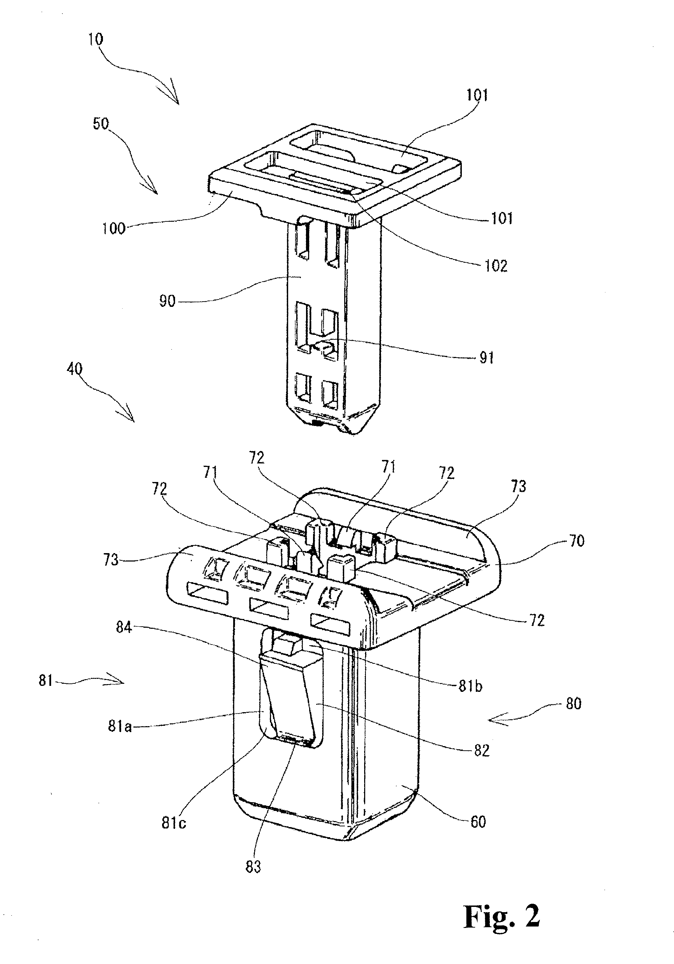

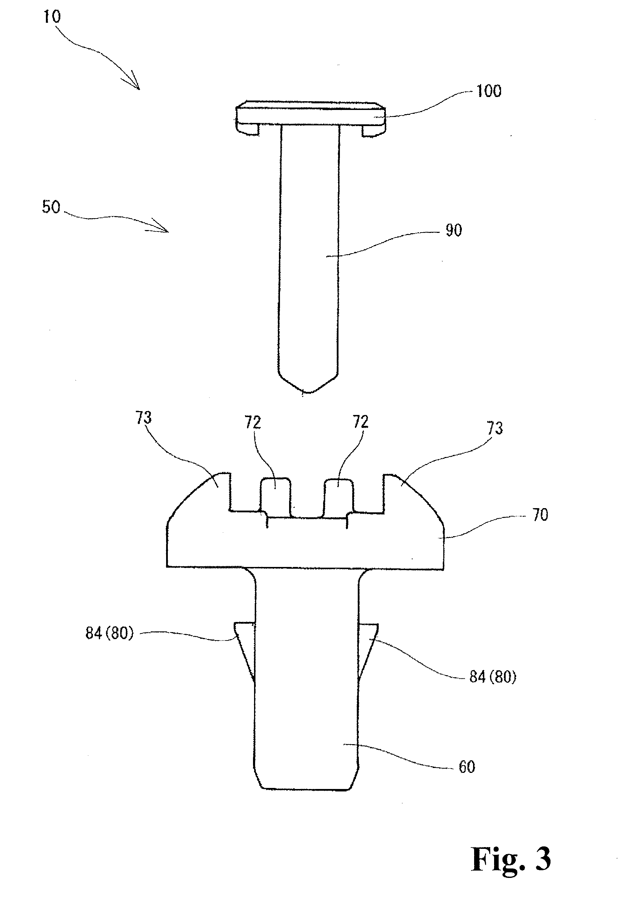

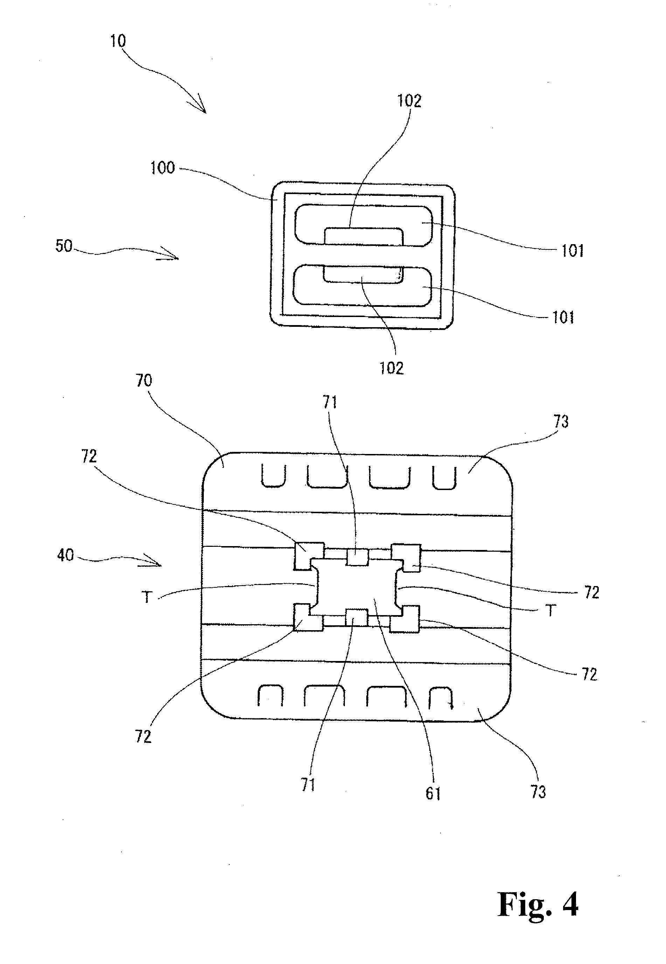

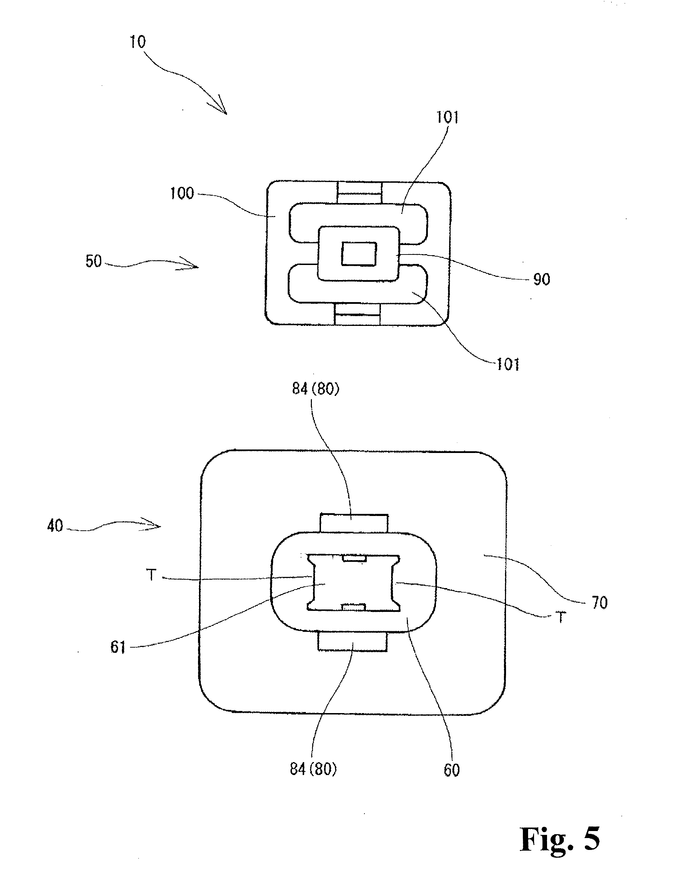

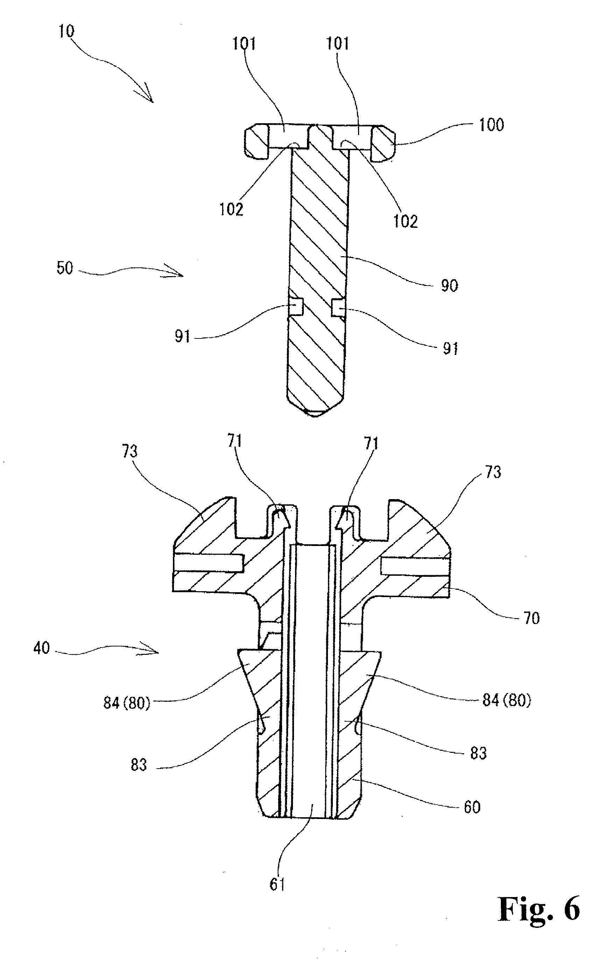

Figs. 1 to 6 each show a fixing tool in the exploded state, Fig. 1 is a front view, Fig. 2 is a perspective view, Fig. 3 is a side view, Fig. 4 is a plan view, Fig. 5 is a bottom view, and Fig. 6 is a sectional view taken along line VI-VI in Fig. 1.

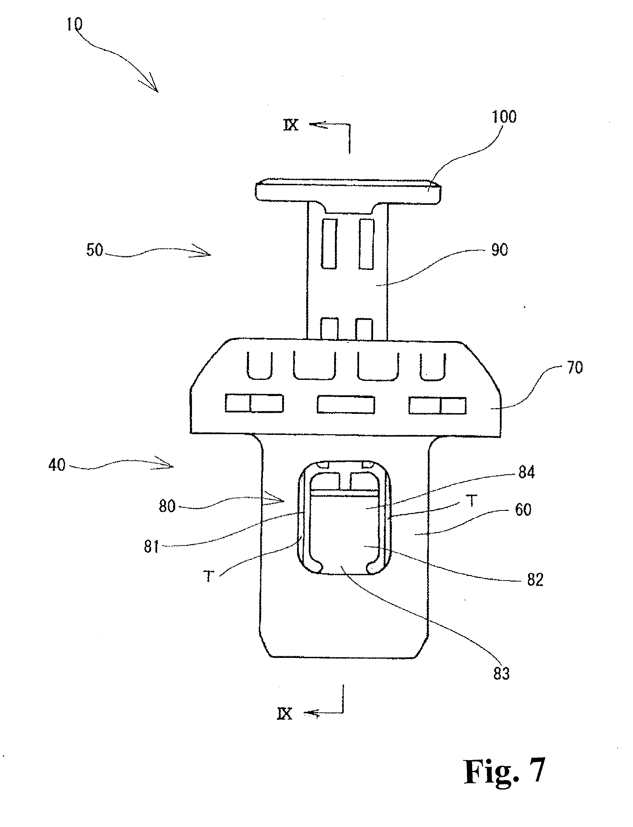

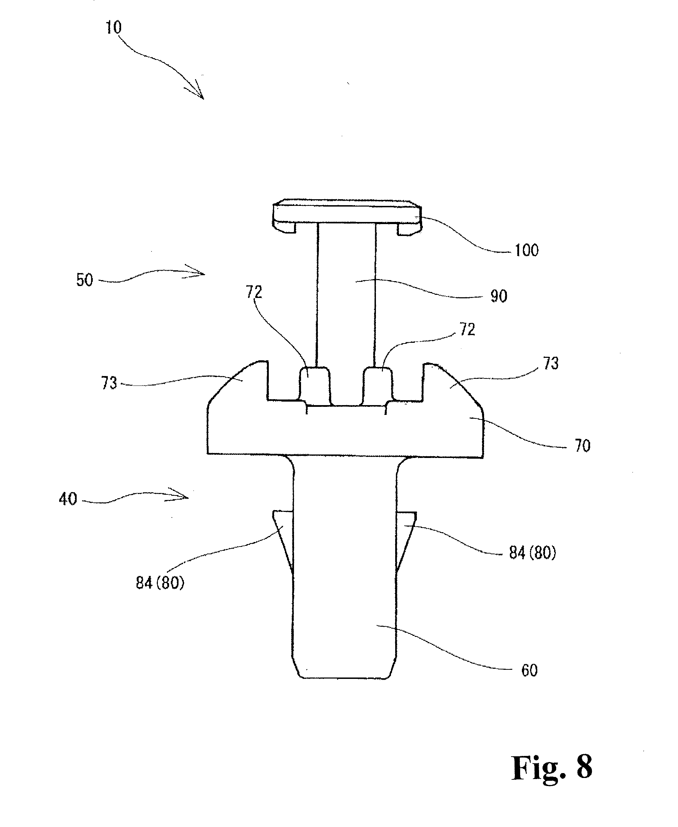

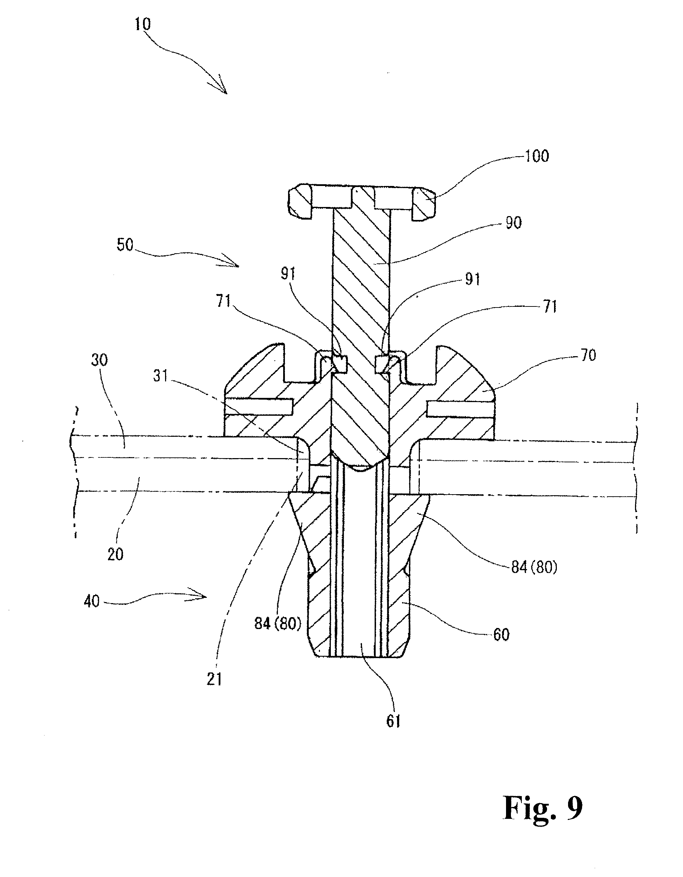

Figs. 7 to 9 each show a state where a stopper is tentatively fastened to a clip, Fig. 7 is a front view, Fig. 8 is a side view, and Fig. 9 is a sectional view taken along line IX-IX in Fig. 7.

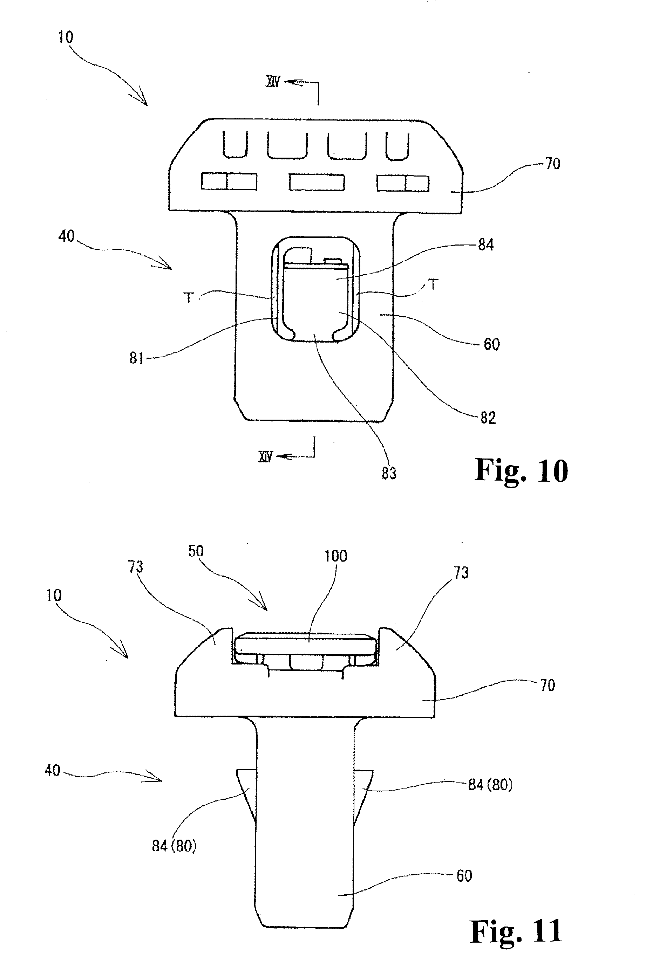

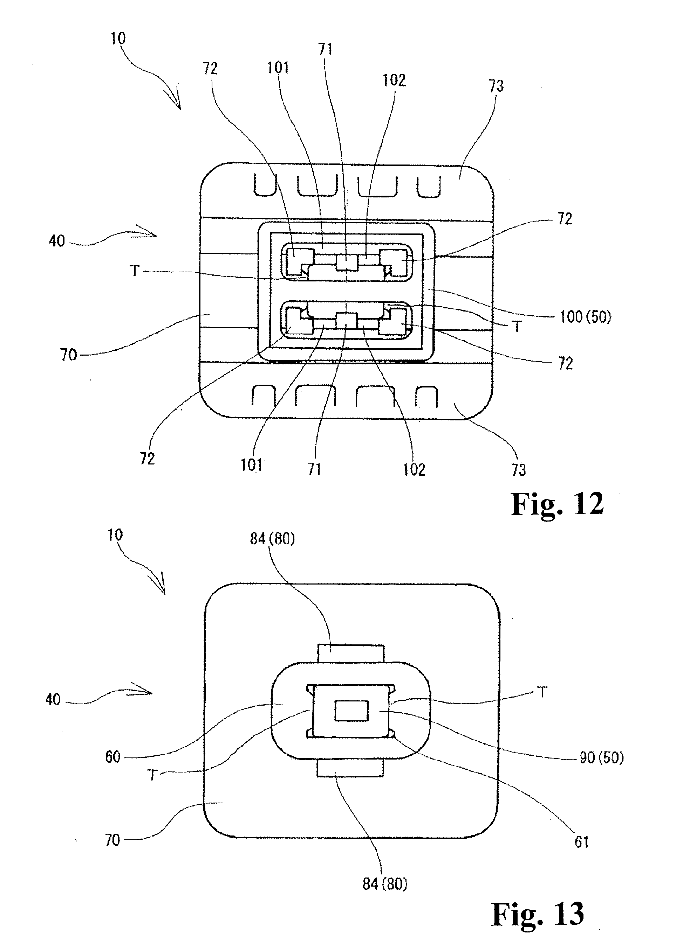

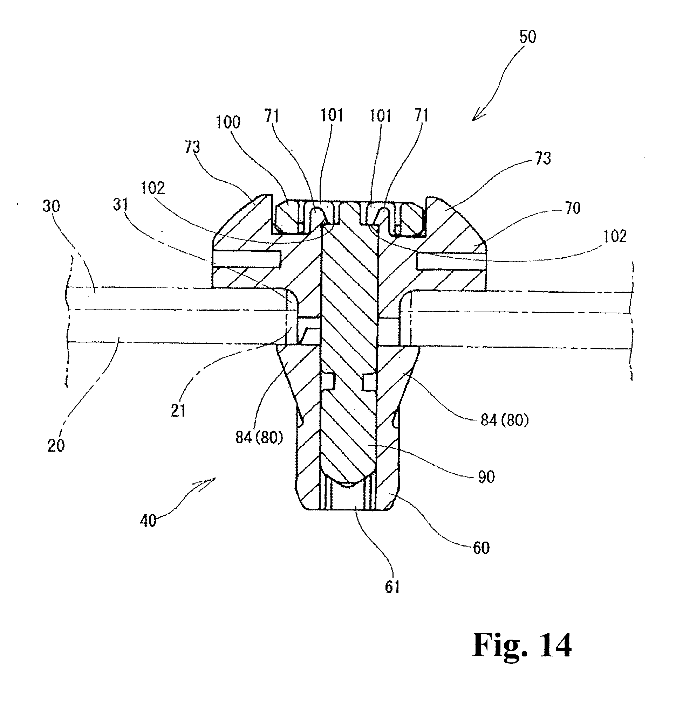

Figs. 10 to 14 each show the fixing tool in an assembled state, Fig. 10 is a front view, Fig. 11 is a side view, Fig. 12 is a plan view, Fig. 13 is a bottom view, and Fig. 14 is a sectional view taken along a line XIV-XIV in Fig. 7.

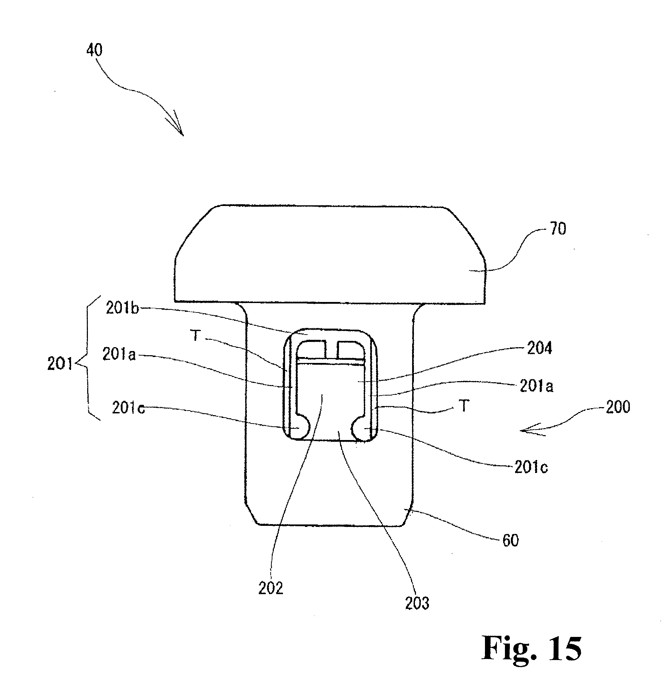

Fig. 15 is a side view showing an example of a clip in accordance with the second embodiment of the present invention.

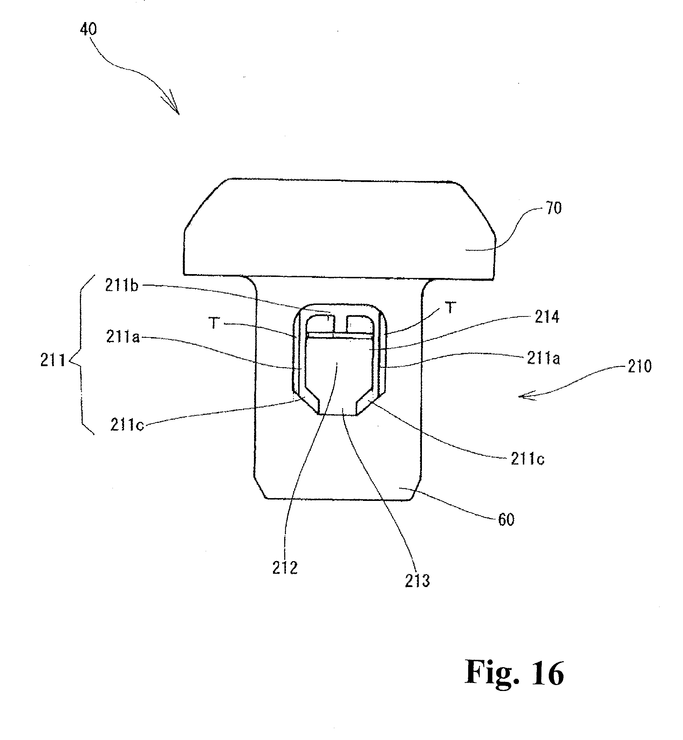

Fig. 16 is a side view showing an example of a clip in accordance with the third embodiment of the present invention.

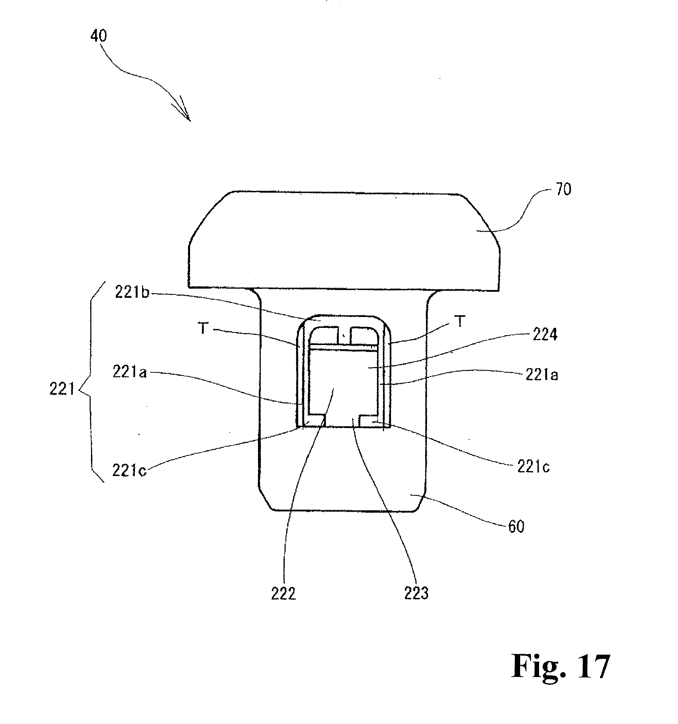

Fig. 17 is a side view showing an example of a clip in accordance with the fourth embodiment of the present invention.

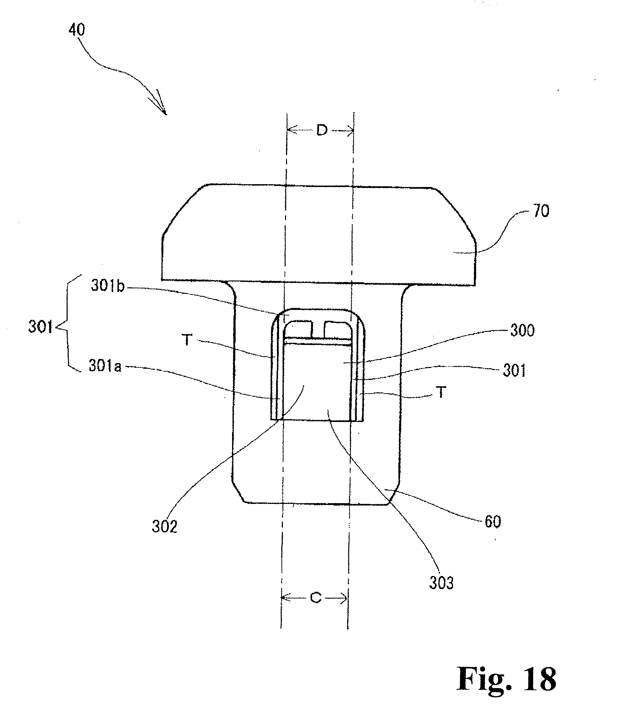

Fig. 18 is a side view showing a clip in a comparative example for the present invention.

### (Fixing tool 10)

In Figs. 1 to 6, a reference numeral 10 denotes the fixing tool. An air bag not shown is fixed to, for example, a vehicle interior by using the fixing tool 10.
Specifically, as shown in Fig. 14, an attachment piece 30 as a part of the air bag (not shown) is fixed to an inner panel 20 in the vehicle interior as a base by using the fixing tool 10.

The inner panel 20 is, as shown in Fig. 14, provided with a substantially rectangular attachment hole 21 that passes through its front and back surfaces and can insert the fixing tool 10 thereinto. The attachment piece 30 is also provided with a rectangular through hole 31 that passes through its front and back surfaces, can insert the fixing tool 10 thereinto, and aligns with the attachment hole 21 of the inner panel 20.
Although the inner panel 20 is used as an example of the base and the attachment piece 30 of the air bag (not shown) is used as an example of the part, the base and the part are not limited to these. The shape of the attachment hole 21 and the through hole 31 is not limited to rectangle.

The fixing tool 10 is, as shown in Figs. 1 to 6, mainly constituted of following parts.
Following (1) and (2) will be described later.
(1) Clip 40
(2) Stopper 50
The parts of the fixing tool 10 are not limited to above (1) and (2) and for example, may be constituted of only the clip 40.

### (Clip 40)

The clip 40 is, as shown in Fig. 14, inserted together in a state where the attachment hole 21 of the inner panel 20 aligns with the through hole 31 of the attachment piece 30, to fix the inner panel 20 and the attachment piece 30 in an overlapped state. The clip 40 is integrally made of a synthetic resin having appropriate elasticity and rigidity.

Specifically, the clip 40 mainly has, as shown in Figs. 1 to 6, following parts.
Following (1) to (3) will be described later.
(1) Leg 60
(2) Base portion 70
(3) Claw 80
The parts of the clip 40 are not limited to above (1) to (3).

### (Stopper 50)

The stopper 50 is, as shown in Fig. 14, shaped into a male-type that can be inserted into a hollow portion 61 of the clip 40 of female type, and prevents claws 80 from bending into the hollow portion 61 in the state where the stopper 50 is deeply inserted into the hollow portion 61, thereby preventing the clip 40 from carelessly escaping out of the attachment hole 21 and the through hole 31. Like the clip 40, the stopper 50 is made of a synthetic resin having appropriate elasticity and rigidity.

The stopper 50 is, as shown in Fig. 9, tentatively fastened in the state where the stopper 50 is shallowly inserted into the hollow portion 61 of the clip 40, and in the tentatively fastened state, the claws 80 can be bent into the hollow portion 61.
Specifically, the stopper 50 mainly has, as shown in Figs. 1 to 6, following parts.
Following (1) and (2) will be described later.

### (1) Shaft 90

### (2) Flange 100

The parts of the stopper 50 are not limited to above (1) and (2).

### (Leg 60)

The leg 60 can, as shown in Figs. 1 to 3 and Fig. 14, be inserted into the attachment hole 21.

The leg 60 is shaped like a hollow rectangular tube.
Specifically, the leg 60 is, as shown in Fig. 2, shaped like a rectangle having a plane that is long in the lateral direction and short in the anteroposterior direction.

### (Base portion 70)

The base portion 70, as shown in Figs. 1 to 6 and Fig. 14, greatly overhangs from a rear end of the leg 60 in the inserting direction further than an inner shape of the attachment hole 21.

The base portion 70 is formed to be larger than an outer shape of the leg 60, that is, as shown in Fig. 2, to have a rectangular flat plane that is long in the lateral direction and short in the anteroposterior direction.
As shown in Figs. 4 to 6, the hollow portion 61 opened on its upper and lower sides is formed from an upper surface of the base portion 70 to the leg 60.
Like the base portion 70 and the leg 60, as shown in Figs. 4 and 5, the hollow portion 61 is formed to have a rectangular flat plane that is long in the lateral direction and short in the anteroposterior direction.

Specifically, the base portion 70 includes, as shown in Figs. 2 to 4 and Fig. 6, following parts.
The parts of the base portion 70 are not limited to following (1) to (3).

### (1) Engaging claws 71

A pair of opposed engaging claws 71, as shown in Figs. 2, 4 and 6, protrudes from an edge of an opened upper surface of the hollow portion 61 to tentatively fasten the below-mentioned stopper 50 as shown in Fig. 9 or finally fasten the stopper 50 as shown in Fig. 14.

The pair of engaging claws 71, as shown in Fig. 4, is opposed to each other at a narrow area of the hollow portion 61 and is formed on the same side as the below-mentioned pair of claws 80. The engaging claws 71, as shown in Fig. 6, elastically protrude toward the inner side of the hollow portion 61.

### (2) Guide pieces 72

Four guide pieces 72, as shown in Figs. 2 to 4, protrude from the respective four corners of the opened upper surface of the hollow portion 61. The four guide pieces 72, as shown in Fig. 12, are fitted into below-mentioned windows 101 of the flange 100 of the stopper 50 to prevent the stopper 50 from being unstable and carelessly coming out.

### (3) Ribs 73

A pair of ribs 73, as shown in Figs. 2 to 4, protrudes upward from opposed edges of the base portion 70. As shown in Fig. 11, the flange 100 of the stopper 50 is fitted between the pair of ribs 73, and by setting a height of the ribs 73 from the upper surface of the base portion 70 to be equal to or larger than a thickness of the flange 100, an external force is made hard to act on the flange 100, thereby preventing the stopper 50 from carelessly coming out.

### (Claw 80)

The claws 80 are, as shown in Figs. 1, 2 and 14, away from and opposed to the base portion 70, and elastically protrude from an outer side wall of the leg 60. When the leg 60 is inserted into the attachment hole 21, although not shown, the claws 80 are pressed by an inner edge of the attachment hole 21 and bent into the hollow portion 61 of the leg 60, and after passing through the attachment hole 21, the claws 80 are restored to the original state by elastic force, and hold the inner panel 20 (base) between the claws 80 and the base portion 70 from the front and back surfaces of the inner panel 20.

The two claws 80 are formed from a pair of wide side walls among the four side walls surrounding the leg 60 so as to be opposed to each other as shown in Figs. 1 to 3.
Although the number of the claws 80 is illustrated as two, the number is not limited to two and may be one or three or more.
The claws 80 each include, as shown in Figs. 1 to 3, Figs. 5 and 6, following parts.

Following (1) to (4) will be described later.
(1) Slit 81
(2) Elastic piece 82
(3) Hinge 83
(4) Protrusion 84
The parts of the claws 80 are not limited to above (1) to (4).

### (Slit 81)

The slit 81, as shown in Figs. 1 and 2, passes through front and back surfaces of at least one side wall of the leg 60, and is U-shaped.

Specifically, the slit 81 includes, as shown in Figs. 1 and 2, following grooves.

### (1) Vertical grooves 81a

The opposed vertical grooves 81a parallel to the inserting direction of the leg 60 are provided as shown in Figs. 1 and 2.

### (2) Horizontal groove 81b

A horizontal groove 81b, as shown in Figs. 1 and 2, communicates rear ends of both the vertical grooves 81a in the inserting direction of the leg 60 with each other.

### (3) Bent grooves 81c

A pair of bent grooves 81c is, as shown in Figs. 1 and 2, line-symmetrically bent from front ends of both the vertical grooves 81a in the inserting direction of the leg 60, so as to get closer to each other.
Specifically, the pair of bent grooves 81c is, as shown in Figs. 1 and 2, circularly bent into a substantially J-like shape.

Although the bent grooves 81c are bent into a substantially J-like shape, the present invention is not limited to this.

### (Elastic piece 82)

The elastic piece 82, as shown in Figs. 1 and 2, is surrounded with the slit 81, that is, surrounded with the two vertical grooves 81a, the horizontal groove 81b, and the two bent grooves 81c on its three sides.

### (Hinge 83)

The hinge 83, as shown in Figs. 1 and 2, does not have slit 81, communicates the elastic piece 82 and the side wall with each other, and is located at the front end in the inserting direction of the leg 60.

A width A of the hinge 83, as shown in Figs. 1 and 2, is smaller than a horizontal width B of the elastic piece 82 on its free end side.

### (Protrusion 84)

The protrusion 84, as shown in Figs. 1 and 2, protrudes from an outer side surface of the elastic piece 82, and is away from and opposed to the base portion 70.

The protrusion 84, as shown in Figs. 2, 3 and 5, is inclined diagonally relative to the inserting direction of the leg 60, and has a substantially right-triangular cross section.

### (Shaft 90)

As shown in Fig. 14, the shaft 90 is inserted into the hollow portion 61 of the clip 40, and the claws 80 are bent into the hollow portion 61, thereby preventing the clip 40 from carelessly coming out of the attachment hole 21 or the through hole 31.

The shaft 90 is shaped like a rectangular column conforming to the inner shape of the hollow portion 61, and its front end is tapered so as to be easily insertable.
Specifically, the shaft 90 has, as shown in Figs. 1, 2, 6, and 9, a following part.
The part of the shaft 90 is not limited to following (1).

### (1) Tentative fastening grooves 91

A pair of tentative fastening grooves 91 is, as shown in Figs. 1, 2, 6, and 9, formed in the middle of the shaft 90 on opposed side surfaces of the shaft 90, and the pair of engaging claws 71 of the clip 40 is fitted into the respective tentative fastening grooves 91.

In the state where the engaging claws 71 are fitted into the tentative fastening grooves 91, as shown in Fig. 9, the shaft 90 is located on the side of the base portion 70 of the clip 40 such that the claws 80 can be bent into the hollow portion 61.

### (Flange 100)

The flange 100, as shown in Figs. 1 to 6, greatly overhangs from a rear end of the shaft 90 in the inserting direction further than an inner shape of the hollow portion 61.

The flange 100 is formed to be larger than an outer shape of the shaft 90, that is, as shown in Fig. 2, to have a rectangular flat plane that is long in the lateral direction and short in the anteroposterior direction.
Specifically, the flange 100 has, as shown in Figs. 1 to 6 and Fig. 14, following parts.
The parts of the flange 100 are not limited to following (1) and (2).

### (1) Windows 101

A pair of windows 101, as shown in Figs. 12 and 14, into which the pair of engaging claws 71 and the four guide pieces 72 of the clip 40 are fitted, is provided.
That is, the flange 100 is formed into a frame substantially in the shape of a character "square-eight-shape" as shown in Fig. 4, and two frames substantially in the shape of a character "square-shape" in "square-eight-shape" are windows 101. The windows 101 each are shaped like a rectangular that is long in the horizontal direction in Fig. 4, and pass through front and back surfaces of the flange 100.

### (2) Engaging steps 102

A pair of stepped engaging steps 102 catching the pair of engaging claws 71 of the clip 40 is provided as shown in Fig. 14.
At least a pair of ridges T is formed on an inner side surface of the leg 60 of the clip 40, in which the slit 81 is not formed. The ridges protrude toward the inside of the leg 60, that is, the hollow portion 61 up to positions facing the opposed vertical grooves 81a of the leg 60. This configuration serves to ensure the thickness of a wall of the leg 60, thereby ensuring resistance to the shearing force applied to the clip 40 (leg 60). The ridges T also act to prevent unsteadiness of the inserted stopper 50. The shape of the ridges T may be, in addition to the illustrated shape, any shape as long as it does not obstacle bending of the claws 80 toward the inside of the leg when the leg 60 is inserted into the attachment hole 21. In the illustrated embodiment, although the ridges T are provided over the whole length of the leg 60, the ridges 40 may be provided only a region between the lower surface of the base portion 70 of the clip 40 and the protrusion 84 of the elastic piece 82 (region where the inner panel 20 and the attachment piece 30 are located, that is, where the shearing force is applied to the leg 60).

### (Attachment method of fixing tool 10)

Next, an attachment method of the attachment piece 30 of the air bag (not shown) using the fixing tool 10 having the above-mentioned configuration will be described.

First, the stopper 50 is tentatively fastened to the clip 40 and then, in the state where the attachment hole 21 of the inner panel 20 and the through hole 31 of the attachment piece 30 are aligned with each other, the leg 60 of the clip 40 is inserted, and the inner panel 20 and the attachment piece 30 are fixed to each other in an overlapping state via the clip 40. After that, the stopper 50 may be deeply inserted into the clip 40. Alternatively, the inner panel 20 and the attachment piece 30 may be fixed to each other in an overlapping state via the clip 40 without tentatively fastening the stopper 50 and then, the stopper 50 may be inserted into the hollow portion 61 of the clip 40 and finally fastened.

After inserting the leg 60 of the clip 40 into the through hole 31 of the attachment piece 30 and attaching the attachment piece 30 to the clip 40, the leg 60 of the clip 40 may be inserted into the attachment hole 21 of the inner panel 20.
In this embodiment, the former procedure, that is, the procedure of tentatively fastening the stopper 50 and then, attaching the attachment piece 30 will be described.
First, the shaft 90 of the stopper 50 is aligned with the opened upper surface of the hollow portion 61 of the clip 40 and inserted to tentatively fasten the stopper 50 to the clip 40.

When the shaft 90 of the stopper 50 is inserted, as shown in Fig. 9, the engaging claws 71 elastically protruding toward the inside of the hollow portion 61 of the clip 40 are fitted into the respective tentative fastening grooves 91 located in the middle of the shaft 90.
When the engaging claws 71 are fitted, the stopper 50 is tentatively fastened in the state where the shaft 90 is shallowly inserted into the hollow portion 61.
Next, the attachment hole 21 of the inner panel 20 and the through hole 31 of the attachment piece 30 are aligned with each other and then, the leg 60 of the clip 40 is inserted along the through hole 31 of the attachment piece 30.

When the leg 60 of the clip 40 is inserted, the claws 80 are pressed by inner edges of the through hole 31 of the attachment piece 30 and the attachment hole 21 of the inner panel 20 and bent about the hinges 83 into the hollow portion 61.
When passing through the attachment hole 21 of the inner panel 20, as shown in Fig. 9, the claws 80 are restored into the original state due to the elastic restoring force of a resin, and are fixed to place the attachment piece 30 and the inner panel 20 between the claws and the lower surface of the base portion 70 in the overlapping state.

Finally, the shaft 90 of the stopper 50 is, as shown in Fig. 14, deeply inserted into the hollow portion 61 of the clip 40 to finally fasten the stopper 50 to the clip 40.
That is, when the flange 100 of the stopper 50 is strongly pressed down toward the base portion 70 of the clip 40, the engaging claws 71 are detached from the tentative fastening grooves 91, and the shaft 90 proceeds in the hollow portion 61.
After that, the flange 100 contacts the upper surface of the base portion 70, but at this time, the engaging claws 71 are, as shown in Fig. 14, caught on the engaging steps 102 of the stopper 50, resulting in that the shaft 90 cannot come out of the hollow portion 61.

At this time, the outer side surface of the shaft 90 of the stopper 50 are, as shown in Fig. 14, opposed to inner side surfaces of the claws 80 facing the inside of the hollow portion 61.
If the claws 80 attempt to bend into the hollow portion 61, the claws 80 contact the outer side surface of the shaft 90 of the stopper 50, so that its bending into the hollow portion 61 is prevented.
For this reason, the claws 80 are bent into the hollow portion 61, thereby preventing the claws 80 from carelessly escaping out of the attachment hole 21 of the inner panel 20 and the through hole 31 of the attachment piece 30.

### (Second embodiment in Fig. 15)

With reference to Fig. 15, an example of the second embodiment of the present invention will be described.

A feature of this embodiment is that, as shown in Fig. 15, bent grooves 201c of slit 201 of a claw 200 of the clip 40 each are semi-circularly formed.
Specifically, the bent grooves 201c, as shown in Fig. 15, are formed such that semicircular curved surfaces are opposed to each other.
Although the bent grooves 201c are semi-circularly formed, they may be circularly or elliptically formed.

In the description of this embodiment, the same components as those in the first embodiment described with reference to Figs. 1 to 14 are given the same reference numerals, and the description thereof is omitted. Constituents of the claw 200 in this embodiment are given the "two-hundreds (200)" reference numerals.

### (Third embodiment in Fig. 16)

With reference to Fig. 16, an example of the third embodiment of the present invention will be described.

A feature of this embodiment is that bent grooves 211c of a slit 211 of a claw 210 of the clip 40 each are, as shown in Fig. 16, bent substantially in the shape of a character "dog-leg shape".
Specifically, the bent grooves 211c are, as shown in Fig. 16, bent from lower ends of vertical grooves 211a substantially in the shape of a character "dog-leg shape" and linearly formed.
Although the bent grooves 211c are bent substantially in the shape of a character "dog-leg shape", the present invention is not limited to this and the bent grooves 211c may be bent substantially in the shape of a character "V".

In the description of this embodiment, the same components as those in the first embodiment described with reference to Figs. 1 to 14 are given the same reference numerals, and the description thereof is omitted. Constituents of the claw 210 in this embodiment are given the "two-hundred and tens (210)" reference numerals.

### (Fourth embodiment in Fig. 17)

With reference to Fig. 17, an example of the fourth embodiment of the present invention will be described.

A feature of this embodiment is that bent grooves 221c of a slit 221 of a claw 220 of the clip 40 each are, as shown in Fig. 17, bent substantially in the shape of a character "L".
Specifically, the bent grooves 221c are, as shown in Fig. 17, bent from lower ends of vertical grooves 221a substantially in the shape of a character "L" and linearly formed.
Although the bent grooves 221c are bent substantially in the shape of an "L", the present invention is not limited to this and the bent grooves 221c may be bent substantially in the shape of a character "V".

In the description of this embodiment, the same components as those in the first embodiment described with reference to Figs. 1 to 14 are given the same reference numerals, and the description thereof is omitted. Constituents of the claw 210 in this embodiment are given the "two-hundred and twenties (220)" reference numerals.

### (Comparative example in Fig. 18)

With reference to Fig. 18, a comparative example for the present invention will be described.

As in this comparative example, when the bent grooves 81c in Fig. 1 are not provided, as shown in Fig. 18, a width C of a hinge 303 is equal to a horizontal width D of an elastic piece 302 on its free end side.
In the description of this comparative example, the same components as those in the first embodiment described with reference to Figs. 1 to 14 are given the same reference numerals, and description thereof is omitted. Constituents of a claw 300 in this embodiment are given the "three-hundreds (300)" reference numerals.

Comparing the claw 80 having the bent grooves 81c in the first embodiment with the claw 300 having no bent grooves 81c in this comparative example in the inserting force into the attachment hole 21 of the inner panel 20, the inserting force of the claw 80 having the bent grooves 81c in the first embodiment is equal to or smaller than a half of the inserting force of the claw 300 having no bent groove 81c in this comparative example.
Comparing the claws 80 with the claws 300 in the inserting force with a change of the thickness of the inner panel 20, for the inner panel 20 having a relatively small thickness, for example, "0.7 mm", the inserting force of the claws 80 having the bent grooves 81c in the first embodiment was "21.8 N" for example, while the inserting force of the claws 300 having no bent grooves 81c in this comparative example was "52.6 N" for example. A down rate of the inserting force of the claws 80 having the bent grooves 81c in the first embodiment is about "60%".

For the inner panel 20 having a relatively large thickness, for example, "1.6 mm", the inserting force of the claws 80 having the bent grooves 81c in the first embodiment was "28 N" for example, while the inserting force of the claws 300 having no bent grooves 81c in this comparative example was "51.8 N" for example. The down rate of the inserting force of the claws 80 having the bent grooves 81c in the first embodiment is about "46%".

Next, comparing the claws 80 having the bent grooves 81c in the first embodiment with the claws 300 having no bent grooves 81c in this comparative example in pulling force from the attachment hole 21 of the inner panel 20, the pulling force of the claws 80 having the bent grooves 81c in the first embodiment is smaller than that of the claws 300 having no bent grooves 81c in this comparative example.
Comparing the claws 80 with the claws 300 in the pulling force with a change of the thickness of the inner panel 20, for the inner panel 20 having a relatively small thickness, for example, "0.7 mm", the pulling force of the claws 80 having the bent grooves 81c in the first embodiment was "1494 N" for example, while the pulling force of the claws 300 having no bent grooves 81c in this comparative example was "1619 N" for example. The down rate of the inserting force of the claws 80 having the bent grooves 81c in the first embodiment is about "7.7%".

For the inner panel 20 having a relatively large thickness, for example, "1.6 mm", the pulling force of the claws 80 having the bent grooves 81c in the first embodiment was "2530 N" for example, while the pulling force of the claws 300 having no bent grooves 81c in this comparative example was "2640 N" for example. The down rate of the inserting force of the claws 80 having the bent grooves 81c in the first embodiment is about "4.2%".
The whole contents of the description, Claims, Drawings and Abstract of Japanese Patent Application No. 2008-224849 filed on September 2, 2008 are cited herein and incorporated hereinto as disclosure of Description of the present invention.

## Claims

1. A clip for attaching a part to an attachment hole of a base, comprising:
a leg that can be inserted into the attachment hole;
a base portion overhanging from a rear end of the leg in an inserting direction further than an inner shape of the attachment hole; and
a claw that is located away from and opposed to the base portion and elastically protrudes from an outer side surface of the leg, wherein when the leg is inserted into the attachment hole, the claw is pressed by an inner edge of the attachment hole and bent into a hollow portion of the leg, and after passing through the attachment hole, the claw restores to an original state by elastic force and holds the base between the claw and the base portion from front and back surfaces of the base,
wherein the claw includes
a U-shaped slit passing through front and back surfaces of at least one side wall of the leg,
an elastic piece surrounded with the slit,
a hinge that has no slit, communicates the elastic piece and the side wall with each other, and is located on a front end side in the inserting direction of the leg, and
a protrusion that protrudes from an outer side surface of the elastic piece, and is located away from and opposed to the base portion, and
the slit includes
an opposed pair of vertical grooves parallel to the inserting direction of the leg,
a horizontal groove communicating rear ends of both the vertical grooves in the inserting direction of the leg with each other, and
a pair of bent grooves line-symmetrically bent closer to each other from front ends of both the vertical grooves in the inserting direction of the leg.

2. The clip according to claim 1, wherein the pair of bent grooves is circularly bent.

3. The clip according to claim 1, wherein a width of the hinge in a direction orthogonal to the inserting direction of the leg is smaller than a horizontal width of the elastic piece on a free end side.

4. The clip according to claim 1, wherein an inner side surface of the leg has at least a pair of ridges protruding into the hollow portion up to positions facing the vertical grooves.
